(19) Europäisches Patentamt
European Patent Office
Office européen des brevets

(11) Publication number: **0 414 570 A2**

# (12) EUROPEAN PATENT APPLICATION

(21) Application number: **90309338.3**

(51) Int. Cl.5: **B29C 67/14**, B29D 31/00

(22) Date of filing: **24.08.90**

(30) Priority: **25.08.89 JP 217209/89**

(43) Date of publication of application:
**27.02.91 Bulletin 91/09**

(84) Designated Contracting States:
**CH DE FR GB IT LI NL**

(71) Applicant: **MITSUI PETROCHEMICAL INDUSTRIES, LTD.**
**2-5, Kasumigaseki 3-chome Chiyoda-ku**
**Tokyo(JP)**
(84) **CH**

Applicant: **Ishikawajima-Harima Heavy Industries Co., Ltd.**
**2-1, Ohtemachi 2-chome**
**Chiyoda-ku, Tokyo(JP)**
(84) **GB**

(72) Inventor: **Kameyama, Masao, Mitsu Petrochemical Ind. Ltd.**
**580-32, Aza-Taku 2-go, Nagaura,**
**Sodegaura-cho**
**Kimitsu-gun, Chiba(JP)**
Inventor: **Sampo, Takeo, Mitsu Petrochemical Ind. Ltd.**
**580-32, Aza-Taku 2-go, Nagaura,**
**Sodegaura-cho**
**Kimitsu-gun, Chiba(JP)**
Inventor: **Aoki, Hideya, Mitsu Petrochemical Ind. Ltd.**
**580-32, Aza-Taku 2-go, Nagaura,**
**Sodegaura-cho**
**Kimitsu-gun, Chiba(JP)**
Inventor: **Katsumata, Ichiro, c/o Ishikawajima-harima Heavy Industries., Co., Ltd., 3-5-1, Mukodai-machi**
**Tanashi-shi, Tokyo(JP)**
Inventor: **Imamura, Ryuzo, c/o Ishikawajima-harima Heavy Industries., Co., Ltd., 3-5-1, Mukodai-machi**
**Tanashi-shi, Tokyo(JP)**
Inventor: **Murata, Ryo, c/o Ishikawajima-harima Heavy Industries., Co., Ltd., 3-5-1, Mukodai-machi**
**Tanashi-shi, Tokyo(JP)**
Inventor: **Shiraishi, Ryuhei, c/o Ishikawajima-harima Heavy Industries., Co., Ltd., 3-5-1, Mukodai-machi**
**Tanashi-shi, Tokyo(JP)**

(74) Representative: **Myerscough, Philip Boyd et al**
**J.A.Kemp & Co. 14, South Square Gray's Inn**
**London, WC1R 5EU(GB)**

## (54) Material of construction for the inside of the fan case of a turbofan engine and the method of preparing the same.

(57) There is provided a material for use in constructing the inside of the fan case of a turbofan engine which comprises a polymer composite having a low specific gravity, a high flexural strength and a high glass transition temperature, for example a polymer composite obtainable from

(a) the preliminary reaction product of a polyamino compound and an unsaturated bismaleimide compound;
(b) an epoxy group-containing vinyl compound;
(c) an aliphatic halogenated epoxy compound having no vinyl group;
(d) an epoxy curing agent; and
(e) a radical polymerization initiator.

EP 0 414 570 A2

# MATERIAL OF CONSTRUCTION FOR THE INSIDE OF THE FAN CASE OF A TURBOFAN ENGINE AND THE METHOD OF PREPARING THE SAME

## BACKGROUND OF THE INVENTION

This invention relates to a material of construction for the inside of the fan case of a turbofan engine. More particularly, this invention relates to a material of construction for the inside of the fan case of a turbofan engine that is made of a polymer composite satisfying the requirements for light weight, high strength and high heat resistance.

While various types of turbojet engines are currently used in aircraft, turbofan engines are unique in that part of the energy of a jet airflow (primary air) is used to drive a fan for compressing secondary air, which is bypassed from the primary air and directed aft as a fan airflow that combines with the jet airflow to provide an increased propulsive force. Those turbofan engines which have bypass ratios as high as 5 - 7 have the advantage of not only providing high propulsive efficiency during subsonic flights at Mach 0.7 -0.9 but also causing low noise during take-offs and landings because of the reduced net velocity of the jet. Accordingly, such high bypass-ratio turbofan engines are used extensively with large subsonic airlines for commercial passenger service.

With such turbofan engines, the fan cases to duct bypass air are located in the cold section, so their inside area will not be exposed to excessively high temperatures and the linings on the inner surfaces of the cases are not required to have extremely high levels of heat resistance. On the other hand, aircraft manufacturers have to meet the basic requirement for reducing the weight of aircraft as much as possible. Under these circumstances, it is necessary to develop a material of construction that is light weight and which yet has good balance between heat resistance and mechanical strength.

The linings on turbofan engines form the passage of bypass air so that it will flow through fan cases in a smooth way. These linings are made of composite materials that are chiefly composed of light weight synthetic resins, such as glass fiber reinforced unsaturated polyester materials and glass fiber reinforced polyimide materials. The linings on turbofan engines are customarily formed of lightly curved lining plates that are assembled into a cylindrical shape.

Glass fiber reinforced unsaturated polyester materials which are commonly used as lining materials typically have specific gravities of about 1.5 and are adapted for the purpose of reducing the weight of aircraft. On the other hand, their heat resistance has a tendency to deteriorate with time, particularly when they are exposed to elevated temperatures for a prolonged period. Conversely, glass fiber reinforced polyimide materials exhibit excellent heat stability over time but because of their comparatively high specific gravities (about 1.7), they are not completely satisfactory for use as materials of construction in aircraft engines which, among other things, must satisfy the requirement for lighter weight.

## SUMMARY OF THE INVENTION

An object, therefore, of the present invention is to provide a material of construction for the inside of the fan case of a turbofan engine that is composed of a light weight synthetic resin composite materials satisfying all of the requirements for lower specific gravity, increased mechanical strength and higher heat resistance.

The present inventors conducted intensive studies to search for a material of construction for the fan case of a turbofan engine that would attain the above-stated object and found, as results, that a polymer composite material having a specific gravity of no more than 1.5, a flexural strength of at least 12 $kgf/mm^2$ and a glass transition temperature of at least 260 °C was best suited for attaining said object.

The polymer composite material of the present invention is typically formed of a thermosetting resin composition that comprises:

(a) the product of preliminary reaction between a polyamino compound and an unsaturated bismaleimide compound;

(b) an epoxy group containing vinyl compound;

(c) an aliphatic halogenated epoxy compound that does not contain a vinyl group;

(d) an epoxy curing agent; and

(e) a radical polymerization initiator, and which component (a) is formed by preliminary reaction in the

substantial absence of component (b) which is an epoxy group containing vinyl compound.

This thermosetting resin composition provides an internal structural material that is light weight, that exhibits high heat resistance over a prolonged time and that yet has high mechanical strength.

## BRIEF DESCRIPTION OF THE DRAWINGS

Fig. 1 is a longitudinal sectional view of a typical turbofan engine design; and
Fig. 2 is a cross sectional view of an exemplary fan case.

## DETAILED DESCRIPTION OF THE INVENTION

Fig. 1 is a longitudinal sectional view of a typical turbofan engine design, in which part of the energy of a jet airflow 1 (primary air) is used to drive a fan 2 for compressing secondary air, which is bypassed from the primary air and directed aft as a fan airflow 3 that combines with the jet airflow 1 to provide an increased propulsive force.

The fan 2 is located inside a fan case 4 having an inner structural material 5. Symbol "A" in Fig. 1 represents cold section of the engine and "B" represents hot section of the engine.

Fig. 2 is a cross sectional view of a typical example of the fan case which is generally indicated by 4. The inner surface of this fan case 4 is lined with an inner structural material 5 whereas a fan frame 8 which is a strength member is mounted on the fan case by means of supportive members 6 and 7 which are commonly referred to as outer struts.

With this arrangement, the bypass air flowing through the fan case 4 provides a maximum propulsive efficiency, whereby an optimum passage for the bypass air can be formed within the fan case.

### Inner Structural Material

A polymer composite having a specific gravity of no more than 1.5, a flexural strength of at least 12 $kgf/mm^2$ and a glass transition temperature of at least 260 °C is used as a material of construction for the inside of the fan case of a turbofan engine in the present invention.

The polymer composite that satisfies these performance requirements may be formed of a thermosetting resin composition that comprises:

(a) the product of preliminary reaction between a polyamino compound and an unsaturated bismaleimide compound;

(b) an epoxy group containing vinyl compound;

(c) an aliphatic halogenated epoxy compound that does not contain a vinyl group;

(d) an epoxy curing agent; and

(e) a radical polymerization initiator, and which component (a) is formed by preliminary reaction in the substantial absence of component (b) which is an epoxy group containing vinyl compound.

The polyamino compound used to make component (a) of the thermosetting resin composition may be illustrated by, but not limited to, compounds having at least two amino groups in a molecule represented by the following general formula (1):

$R(NH_2)_m$ (1)

where R represents organic groups having a valency of m such as alkylene, cycloalkylene and arylene groups, which may be bonded together either directly or indirectly by other linkage groups; and m is an integer of 2 or more.

Specific examples of such polyamino compounds are listed below: diamino compounds such as 4,4′-diaminodicyclohexylmethane, 1,4-diaminocyclohexane, 2,6-diaminopyridine, m-phenylenediamine, p-phenylenediamine, 4,4′-diaminodiphenylmethane, 4,4′-diaminodiphenylether, 2,2-bis(4-aminophenyl)-propane, benzidine, 4,4′-diaminodiphenylsulfone, 4,4′-diaminodiphenylsulfide, bis(4-aminophenyl)-methylphosphine oxide, m-xylenediamine, 1,5-diaminonaphthalene, p-xylylenediamine, hexamethylenediamine, 1,4′-diaminobenzophenone, 2,5-bis(m-aminophenyl)-1,3,4-oxadiazole, 2,5-bis(p-aminophenyl)-1,3,4-oxadiazole, 4,4′-bis(p-aminophenyl)-2,2′-dithiazole, 3,4′-diaminobenzanilide, 2,2′-bis(m-aminophenyl)-5,5′-dibenzimidazole, and N,N′-bis(p-aminobenzoyl)-4,4′-diaminodiphenylmethane;

tri or tetramino compounds such as 1,2,4'-triaminobenzene, 1,3,5-triaminobenzene, 2,4,6-triaminotoluene, 2,4,6-triamino-1,3,5-trimethylbenzene, 1,3,7-triaminonaphthalene, 2,4,4'-triaminodiphenyl, 2,4,6-triaminopyridine, 2,4,4'-triaminodiphenylmethane, p-aminophenyl-4,4'-diphenylmethane, tri(4-aminophenyl)-methane, 2,4,4'-triaminobenzophenone, 3,5,4'-triaminobenzanilide, melamine, 1,2,4,5-tetraaminobenzene, 2,3,6,7-tetraaminonaphthalene, 3,3',4,4'-tetraaminodiphenylether, 3,3',4,4'-tetraaminodiphenylmethane, and 3,5-bis(3,4'-diaminophenyl)pyridine; and
compounds having 3 or more amino groups such as those represented by the general formula (2):

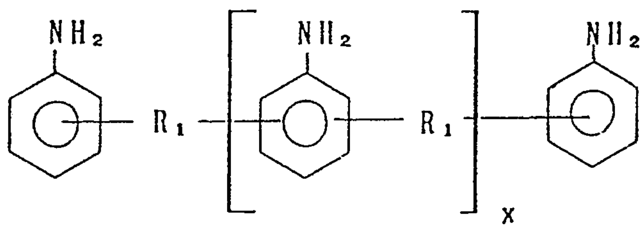
(2)

where $R_1$ is an organic group having 1 - 3 carbon atoms; and x is 0 - 2. For example, $R_1$ is methyl and X is 0.40.

The unsaturated bismaleimide compound used to make component (a) of the thermosetting resin composition may be illustrated by those which are represented by the following general formula (3):

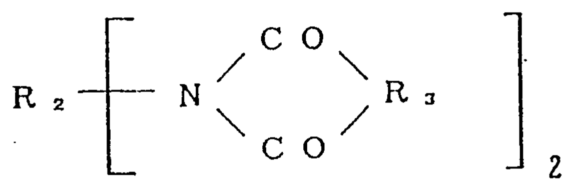
(3)

where $R_2$ is an alkylene, cycloalkylene or aryllene group having at least two carbon atoms, or an organic group consisting of two or more of these groups bonded together; and $R_3$ represents a divalent radical having a carbon-carbon double bond. Examples of such divalent radicals are

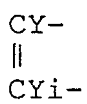 : 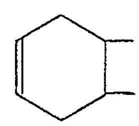 and 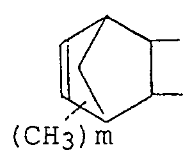 ,

in which Y and Yi are identical or different, each represent H or $CH_3$, and m is equal to 0 or 1.

Specific examples of such unsaturated bismaleimide compounds are listed below:
N,N'-m-phenylene-bismaleimide,N,N'-p-phenylene-bismaleimede, N,N'-hexamethylene-bismaleimide, N,N'-methylene-di-p-phenylene-bismaleimide, N,N'-oxy-di-p-phenylene-bismaleimide, N,N'-4,4'-benzophenone-bismaleimide, N,N',4,4'-diphenylmethane-bismaleimide, N,N',4,4'-diphenylether-bismaleimide, N,N',3,4'-diphenylether-bismaleimide, N,N'-p-diphenylsulfone-bismaleimide, N,N'-(3,3'-dimethyl)-methylene-di-p-phenylene-bismaleimide, N,N'-4,4'-dicyclohexylmethane-bismaleimide, N,N'-m-xylylene-bismaleimide, N,N'-p-xylylene-bismaleimide, N,N'-(3,3'-diethyl)-4,4'-diphenylmethane-bismaleimide, N,N'-m-toluylene-dimaleimide, and the product of reaction between an aniline-formaldehyde reaction product and maleic anhydride.

These unsaturated bismaleimide compounds are reacted in amounts of 0.1 - 10 gram equivalents, preferably 0.5 - 5 gram equivalents, per gram equivalent of polyamino compounds, at a temperature of 80 - 160° C, preferably 100 - 140° C, for a period of 0.1 - 1 h, preferably 0.2 - 0.5 h, to prepare component (a).

The vinyl compound having epoxy group as component (b) may be exemplified such as glycidyl acrylate, glycidyl methacrylate and allylglycidyl ether. The compound may be used alone or a mixture of them. Such component (b) is incorporated in an amount of 2 - 140 parts by weight, preferably 5 - 70 parts by weight, per 100 parts by weight of component (a). When the component (b) is in the range described above, the resulting resin composition has proper viscosity to be handled and to exhibit high heat

resistance.

Component (c), or an aliphatic halogenated epoxy compound that does not contain a vinyl group may be illustrated by halides, such as bromide and chloride, of epoxy compounds. Examples of aliphatic epoxy compounds include ethylene glycol diglycidyl ether, propylene glycol diglycidyl ether and pentaerythritol polyglycidyl ether. Examples of glycidiylester epoxy compounds include a product by reaction between aliphatic carboxylic acid and epichlorohydrin. The aliphatic halogenated epoxy compound may be obtained, for example, by reacting these epoxy compounds with bromine gas or chlorine gas at a temperature of 100 - 160 °C. The halogen content of component (c) is preferably within the range of 1 - 50 wt%, more preferably 5 - 20 wt%.

Among the epoxy resins listed above, those which have an epoxy equivalent weight of 20 - 1,000, preferably 50 - 300, and a viscosity at 25 °C within the range of 1 - 30,000 cPs, preferably 5 - 10,000 cPs, may be used with particular advantage since they contribute to the production of resin compositions in a liquid state that can be handled efficiently. Component (c) is incorporated in an amount of 1 - 100 parts by weight, preferably 5 - 20 parts by weight, per 100 parts by weight of component (b). When the component (c) is in the range described above, the resulting resin composition has adequate flame retardancy, high heat resistance and low specific gravity.

The epoxy curing agent as component (d) may be illustrated by aliphatic amines such as diethylenetriamine, triethylenetetramine, tetraethylenepentamine, dipropylenediamine and diethylaminopropylamine;
aromatic amine such as m-phenylenediamine, 4,4′-diaminodiphenylmethane and 4,4′-diaminodiphenylsulphone;
acid anhydrides such as trimellitic acid anydride and pyromellitic acid anhydride, dicyandiamide;
hydrazines; imidazoles such as 2-methylimidazole, 2-ethyl-4-methylimidazole and 2-undecylimidazole;
biguanides such as O-tolylbiguanide, 5-hydroxynaphthyl-1-biguanide and phenylbiguanide;
hidrazides such as succinic acid hidrazide and adipic acid hidrazide; and amine complexes such as boron trifluoride. Among these, dicyandiamide and imidazoles are particularly effective curing agents since they are stable at low temperatures and contribute to rapid curing. Component (d) is incorporated in an amount of 0.01 - 100 parts, preferably 0.1 - 10 parts by weight, per 100 parts by weight of the sum of resin components (a), (b) and (c). When the component (d) is in the range described above, the resulting resin composition has moderate curing speed at a reaction temperature and good stability at low temperatures.

The radical polymerization initiator as component (e) may be exemplified by:

(1) hydroperoxide compounds having -O-O-H bonded to a secondary or tertiary carbon atom, such as isopropyl hydroperoxide, t-butyl hydroperoxide, cumylhydroperoxide and perbenzoic acid;

(2) peroxide compounds having -O-O- bonded to a secondary or tertiary carbon atom, such as diisopropyl peroxide, di-t-butyl peroxide and dicumyl peroxide;

(3) peroxides containing two peroxy groups in one molecule, such as 2,5-dimethyl-2,5-bis(t-butylperoxy)-hexane, 2,5-dimethyl-2,5-bis(t-butylperoxy)hexene-3, 2,5-dimethyl-2,5-bis(t-butylperoxy)hexyne-3, and 1,3-bis(t-butylperoxyisopropyl)benzene (these bisperoxides are particularly useful in view of the peroxy value); and

(4) organic azo compounds having at least one -O-N=N- bond in the molecular structure, as typified by azobisalkanonitriles such as azobisisobutyronitrile and azobiscarboamide.

Among these compounds, dicumyl peroxide in group (2) is particularly preferred. Component (e) is incorporated in an amount of 0.01 - 10 parts by weight, preferably 0.1 - 2 parts by weight, per 100 parts by weight of the sum of resin components (a), (b) and (c). When the component (e) is in the range described above, the resulting resin composition has moderate curing speed.

The thermosetting resin composition described above may incorporate additives as required, such as flame retardants, fillers and internal release agents that are known per se. Incorporation of flame retardants is particularly preferred for the purpose of providing an inner structural material having enhanced flame retardancy. Fillers are also preferred additives in the case where structural materials having particularly high mechanical strength are desired.

Exemplary flame retardants include inorganic compounds such as antimony trioxide, zinc borate and ammonia complex salts, organic compounds, non-halogenated phosphate esters, halogenated phosphate esters and halogenated compounds, all of these being known as conventional flame retardants. Antimony trioxide is the most preferred flame retardant. The flame retardant is incorporated in an amount of 0.3 - 30 wt%, preferably 2 - 20 wt%, of the thermosetting resin composition.

Illustrative fillers include glass balloons, calcium carbonate and silica. Among these, chopped glass fibers and glass baloons may be the most preferred since they contribute a particularly high mechanical strength. These fillers are incorporated in amounts of up to 60 wt%, preferably, 5 - 30 wt%, of the

thermosetting resin composition.

Internal release agents are used for the purpose of improving separability from a mold. Illustrative examples of the internal release agent include fatty acids such as stearic acid, metallic soap such as zinc stearate, natural wax and synthetic wax such as ester wax.

The material of construction for the inside of the fan case of a turbofan engine, in accordance with the present invention, may be obtained by impregnating the foregoing thermosetting resin composition into a reinforcing material or mixing the composition with a reinforcing material and by curing the resulting product.

A reinforcing material for use in the present invention may be obtained by making long or continuous filaments of glass, carbon, aramid or the like into a bundle of 10 to 300 filaments, cutting the bundle into 3 to 54 mm length and by mixing the cut bundles directly with the thermosetting resin composition or by making the cut bundles into a shape of mat and then impregnating the thermosetting resin composition into the mat.

In accordance with the present invention, process for the production of the material of construction for the inside of the fan case of a turbofan engine may not be limited specifically, but may preferably be produced by the following means.

Predetermined amounts of a polyamino compound and an unsaturated bis-maleimide compound are heated at a temperature of from 80 to 160° C for 0.1 to 1 hour under an inert gas atmosphere to obtain a prepolymer as a preliminary reaction product. The thus obtained prepolymer is then dissolved by mixing it with a predetermined amount of an epoxy group-containing vinyl compound and by stirring the mixture in a reaction vessel for 10 to 90 minutes at a temperature of from 20 to 100° C.

Next, a thermosetting resin composition is prepared by mixing the thus dissolved material with predetermined amounts of an aliphatic halogenated epoxy compound having no vinyl groups, a curing agent for epoxy resin, an initiator for radical polymerization, a flame retardant, an internal release agent and a filler and then by stirring the mixture at a temperature of from 20 to 60° C.

The thus prepared thermosetting resin composition is impregnated at room temperature into the layer of reinforcing materials such as mats of short glass fibers including a mat of chopped glass fibers, mats of long glass fibers including a diamond mat, carbon fiber mats and aramid fiber mats. The thus impregnated material is pressed at room temperature, stood for several days at room temperature until it becomes tack-free and then cured at a temperature of from 100 to 200° C for 1 to 30 minutes. Thereafter, an additional curing is performed in an air oven at a temperature of from 140 to 220° C for 1 to 24 hours to complete the material of construction for the inside of the fan case of a turbofan engine

## EXAMPLE

The following examples are provided for the purpose of further illustrating the present invention but are in no way to be taken as limiting.

### Example 1

N,N′-4,4′-diphenylmethane bismaleimide (82 parts by weight) and 4,4′-diaminodipnenylmethane (18 parts by weight) were heated with rolls at 130° C for 15 min to perform a preliminary reaction, whereby a prepolymer was obtained in an amount of 100 parts by weight. Subsequently, 55 parts by weight of this prepolymer [component (a)] and 35 parts by weight of glycidyl methacrylate [component (b)] were mixed in a glass reaction vessel at an elevated temperature for 30 min until the prepolymer was melted. Thereafter, the following ingredients were added to the mixture to prepare a thermosetting resin composition:

| Ingredient | Parts by weight |
|---|---|
| Bromated ethylene glycol diglycidyl ether [component (c)] (Bromine Content 32 wt%) | 10 |
| Dicyandiamide [component (d)] | 2 |
| 2-Ethyl-4-methylimidazole (epoxy curing agent) | 0.5 |
| Dicumyl peroxide [DCP, component (e)] | 1 |
| Antimony trioxide (flame retardant, $Sb_2O_3$) | 1 |
| Zinc stearate (internal release agent) | 2 |
| Glass balloon (filler) | 20 |
| (10% breaking pressure : ≧ 150 kgf/cm$^2$<br>average particle size : 40 µm<br>true specific gravity : 0.36) | |

The thus prepared thermosetting resin composition was impregnated in 8 layers of chopped strand glass mat (chop length, 6 mm ; aerial density, 300 g/m$^2$) at room temperature. The prepregs were pressed at room temperature to fabricate sheet molding compounds (SMC) (ca. 3 mm thick) with a glass fiber content of ca. 40 wt%. The SMC was overcoated with a polyethylene release film in a thickness of 50 µm. The SMC was then left to stand at room temperature for several days until it became tack-free (non-sticky). Thereafter, the SMC was subjected to a curing reaction at 150 °C for 20 min and post-cured in an air oven at 160 °C for 8 h to fabricate a material of construction for the inside of the fan case of a turbofan engine.

The physical properties of this structural material were evaluated by the following methods:
Specific gravity : Measured by a water substitution method with an automatic gravimeter at 23 °C.
Strength : Flexural strength and modulus were measured at 20 °C in accordance with ASTM D-790
Glass transition Temperature (Tg) : A TMA (thermomechanical analysis) scan was obtained under the following conditions and Tg was determined from the point of inflection of linear expansion coefficient (heating rate, 2 °C/min; scanning temperature, 23 - 300 °C).

The results of these measurements are shown in Table 1.

Example 2

A material of construction for the inside of the fan case of a turbofan engine was fabricated by repeating the procedure of Example 1 except that glass baloons were incorporated in an amount of 10 parts by weight whereas the glass fiber content of SMC was increased to ca. 50 wt%. The physical properties of this structural material are also shown in Table 1.

Comparative Example 1

A material of construction for the inside of the fan case of a turbofan engine was fabricated, with "Quinelle 5505" (product of Rhone-Poulenc S.A. with a glass fiber content of 50 wt%) being used as a glass fiber reinforced polyimide molding material which is usually used as high heat resistance materials. The physical properties of this structural material are shown in Table 1.

Comparative Example 2

A material of construction for the inside of the fan case of a turbofan engine was fabricated, with "Estamat" (product of Mitsui Toatsu Chemicals, Inc. with a glass fiber content of 30 wt%) being used as a glass fiber reinforced polyester molding material which is usually used as low specific gravity materials. The physical properties of this structural material are shown in Table 1.

Table 1

| | Ex. 1 | Ex. 2 | Comp. Ex. 1 | Comp. Ex. 2 |
|---|---|---|---|---|
| Specific gravity, $\rho$ | 1.3 | 1.5 | 1.7 | 1.5 |
| Flexural strength, $\sigma$ ($kgf/mm^2$) | 14 | 20 | 19 | 18 |
| Flexural modulus ($kg/mm^2$) | 1200 | 1700 | 1500 | 1200 |
| Tg (°C) | 260 | 260 | 270 | 130 |
| Weight of inner structural material (kg) | 0.65 | 0.75 | 0.85 | 0.75 |
| $\sqrt{\sigma}/\rho$ | 3.44 | 3.65 | 2.56 | 2.83 |

As shown Table 1, the materials of this invention have higher $\sqrt{\sigma}/\rho$ values than the values of the materials in comparative examples. The materials of this invention have high mechanical strength per unit weight.

## Claims

1. A material for use in constructing the inside of the fan case of a turbofan engine which comprises a polymer composite having a specific gravity of no more than 1.5, a flexural strength of at least 12 $kgf/mm^2$ and a glass transition temperature of at least 260°C.
2. A material according to claim 1, wherein said polymer composite comprises a thermosetting resin composition and a reinforcing material.
3. A material according to claim 2 wherein the thermosetting resin composition is obtainable from
(a) the product of a preliminary reaction between a polyamino compound and an unsaturated bis-maleimide compound;
(b) an epoxy group-containing vinyl compound;
(c) an aliphatic halogenated epoxy compound that does not contain a vinyl group;
(d) a curing agent for an epoxy resin; and
(e) an initiator for radical polymerization, component (a) being formed by a preliminary reaction in the substantial absence of component (b).
4. A material according to claim 3 wherein said thermosetting resin composition comprises;
2 to 140 parts by weight of component (b) per 100 parts by weight of component (a);
1 to 100 parts by weight of component (c) per 100 parts by weight of component (b);
0.01 to 100 parts by weight of component (d) per 100 parts by weight of the combined weight of components (a), (b) and (c); and
0.01 to 10 parts by weight of component (e) per 100 parts by weight of the combined weight of components (a), (b) and (c).
5. A material according to claim 2, 3 or 4 wherein said thermosetting resin composition further comprises a flame retardant, a filler and an internal release agent.
6. A material of construction according to any one of claims 2 to 5 wherein said reinforcing material is at least one of glass, carbon and aramid.
7. A process for producing a material for use in constructing the inside of the fan case of a turbofan engine comprising the steps of:
(a) preparing a prepolymer by a preliminary reaction of a polyamino compound with an unsaturated bis-maleimide compound;
(b) mixing said prepolymer with a vinyl compound having an epoxy group, an aliphatic halogenated epoxy compound, a curing agent for epoxy compound and an initiator for radical polymerization;
(c) preparing a preform by impregnating a reinforcing material with the composition of step (b) or by mixing said composition with said reinforcing material;
(d) semi-curing the preform of step (c); and
(e) completely curing the product of step (d) by molding said product in a mold with heating.
8. A turbofan engine having a fan case the inside of which is fabricated of a material as claimed in any one of claims 1 to 6.

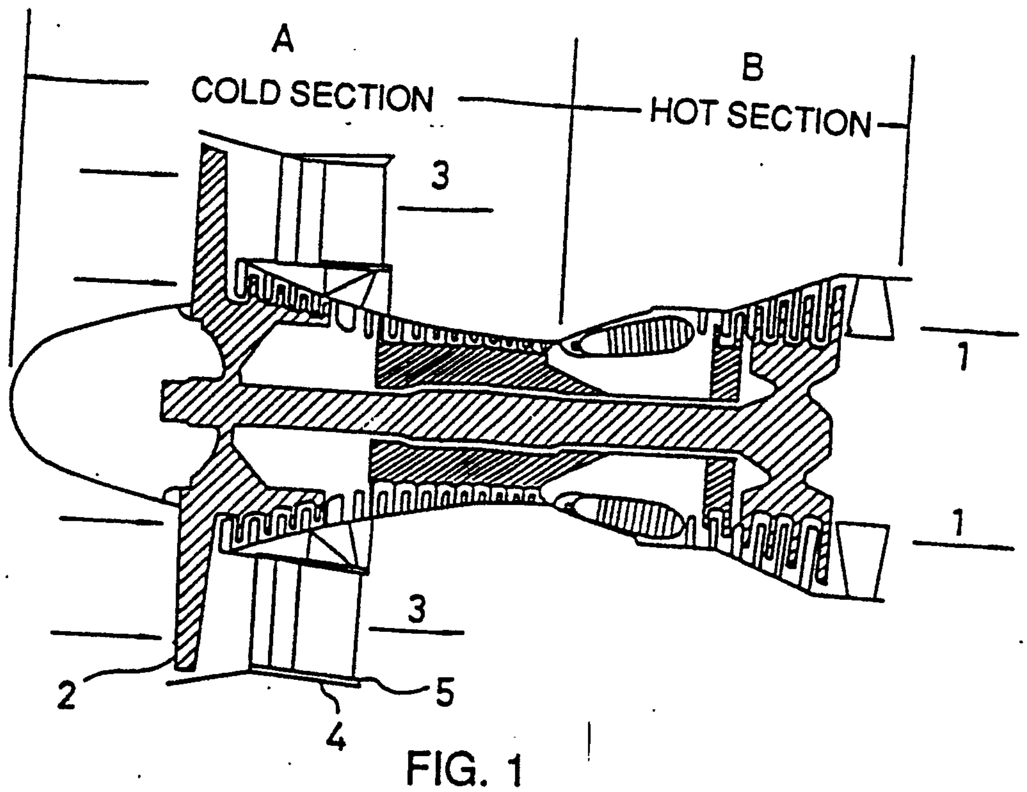


FIG. 1

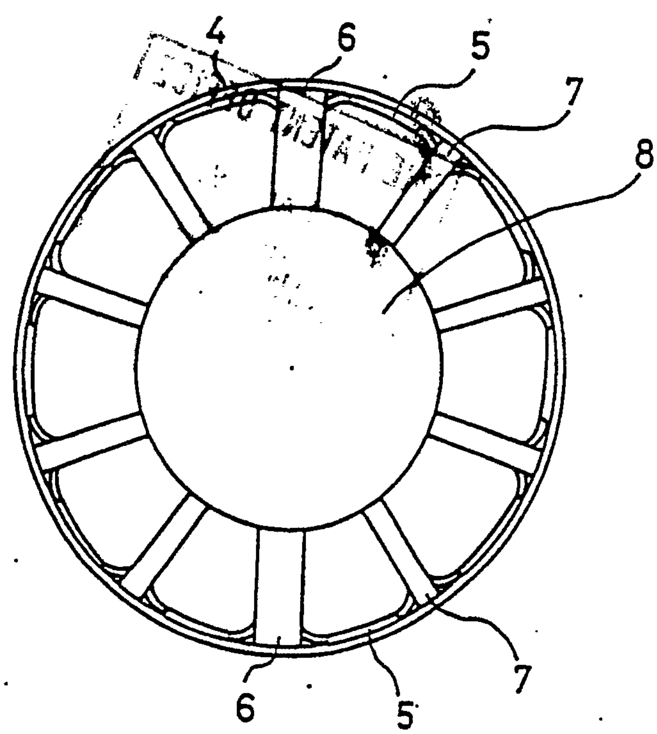


FIG. 2